(19)

Europäisches
Patentamt

European
Patent Office

Office européen
des brevets

(11)  **EP 2 253 039 B1**

(12)  **EUROPEAN PATENT SPECIFICATION**

(45) Date of publication and mention
of the grant of the patent:
**24.07.2013  Bulletin 2013/30**

(21) Application number: **09709661.4**

(22) Date of filing: **12.02.2009**

(51) Int Cl.:
*H01M 8/02* (2006.01)      *H01M 8/04* (2006.01)
*H01M 8/10* (2006.01)

(86) International application number:
**PCT/US2009/033926**

(87) International publication number:
**WO 2009/102870 (20.08.2009 Gazette 2009/34)**

(54) **LOW-POROSITY ANODE DIFFUSION MEDIA FOR DIRECT OXIDATION FUEL CELLS**

ANODENDIFFUSIONSMEDIEN MIT GERINGER POROSITÄT FÜR
DIREKTOXIDATIONSBRENNSTOFFZELLEN

MILIEUX DE DIFFUSION D'ANODE À FAIBLE POROSITÉ POUR PILES À COMBUSTIBLE À
OXYDATION DIRECTE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **15.02.2008  US 71155**

(43) Date of publication of application:
**24.11.2010  Bulletin 2010/47**

(73) Proprietors:
• **Panasonic Corporation
Kadoma-shi
Osaka 571-8501 (JP)**
• **The Penn State Research Foundation
University Park, PA 16802 (US)**

(72) Inventors:
• **LENG, Yongjun
State College, PA 16801 (US)**
• **WANG, Chao-yang
State College, PA 16803 (US)**
• **AKIYAMA, Takashi
Suita-shi
Osaka 564-0072 (JP)**

(74) Representative: **Schwabe - Sandmair - Marx
Patentanwälte
Stuntzstraße 16
81677 München (DE)**

(56) References cited:
EP-A- 1 538 689            WO-A-2007/111201
DE-A1-102006 048 612       JP-A- 2007 234 589
US-A1- 2004 121 208        US-A1- 2005 084 742
US-A1- 2007 154 779

• F. COLMATI ET AL.: "Effect of operational
parameters of mini-direct methanol fuel cells
operating at ambient temperature" JOURNAL OF
APPLIED ELECTROCHEMISTRY, vol. 36, no. 1, 1
January 2006 (2006-01-01), pages 17-23,
XP019247486 ISSN: 1572-8838
• M.A. ABDELKAREEM ET AL.: "DMFC employing
a porous plate for an efficient operation at high
methanol concentrations" JOURNAL OF POWER
SOURCES, vol. 162, no. 1, 8 November 2006
(2006-11-08), pages 114-123, XP025084572 ISSN:
0378-7753 [retrieved on 2006-11-08] cited in the
application

EP 2 253 039 B1

**Description**

**Field of the Disclosure**

The present disclosure relates generally to fuel cells, fuel cell systems, and electrodes/electrode assemblies for the same. More specifically, the present disclosure relates to anodes with improved diffusion media, suitable for direct oxidation fuel cells (hereinafter "DOFC"), such as direct methanol fuel cells (hereinafter "DMFC"), and their components.

**Background of the Disclosure**

A DOFC is an electrochemical device that generates electricity from electrochemical oxidation of a liquid fuel. DOFC's do not require a preliminary fuel processing stage; hence, they offer considerable weight and space advantages over indirect fuel cells, i.e., cells requiring preliminary fuel processing. Liquid fuels of interest for use in DOFC's include methanol, formic acid, dimethyl ether, etc., and their aqueous solutions. The oxidant may be substantially pure oxygen or a dilute stream of oxygen, such as that in air. Significant advantages of employing a DOFC in portable and mobile applications (e.g., notebook computers, mobile phones, personal data assistants, etc.) include easy storage/handling and high energy density of the liquid fuel.

One example of a DOFC system is a direct methanol fuel cell, (DMFC). A DMFC generally employs a membrane-electrode assembly (hereinafter "MEA") having an anode, a cathode, and a proton-conducting membrane electrolyte positioned therebetween. In the MEA, a catalyst layer is usually supported on a diffusion medium (DM) that is made of either a carbon cloth, carbon paper, porous carbon or porous metals. The microporous layers (MPL), may be placed between the catalyst layer and DM, is intended to provide wicking of liquid water into the DM, minimize electric contact resistance with the adjacent catalyst layer, and furthermore prevent the catalyst layer from leaking into the DM, thereby increasing the catalyst utilization and reducing the tendency of electrode flooding.

A typical example of a membrane electrolyte is one composed of a perfluorosulfonic acid - tetrafluorethylene copolymer, such as NAFION® (NAFION® is a registered trademark of E.I. Dupont de Nemours and Company). In a DOFC, an alcohol/water solution is directly supplied to the anode as the fuel and air is supplied to the cathode as the oxidant. At the anode, the alcohol, such as methanol reacts with water in the presence of a catalyst, typically a Pt or Ru metal-based catalyst, to produce carbon dioxide, $H^+$ ions (protons), and electrons. The electrochemical reaction is shown as equation (1) below:

$$CH_3OH + H_2O \rightarrow CO_2 + 6H^+ + 6e^- \qquad (1)$$

During operation of the DOFC, the protons migrate to the cathode through the proton-conducting membrane electrolyte, which is non-conductive to electrons. The electrons travel to the cathode through an external circuit for delivery of electrical power to a load device. At the cathode, the protons, electrons, and oxygen molecules, typically derived from air, are combined to form water. The electrochemical reaction is given in equation (2) below:

$$3/2O_2 + 6H^+ + 6e^- \rightarrow 3H_2O \qquad (2)$$

Electrochemical reactions (1) and (2) form an overall cell reaction as shown in equation (3) below:

$$CH_3OH + 3/2O_2 \rightarrow CO_2 + 2H_2O \qquad (3)$$

One drawback of a conventional DOFC is that the alcohol, such as methanol, partly permeates the membrane electrolyte from the anode to the cathode, such permeated methanol being termed "crossover methanol". The crossover methanol reacts with oxygen at the cathode, causing a reduction in fuel utilization and cathode potential, with a corresponding reduction in power generation of the fuel cell. It is thus conventional for DOFC systems, to use excessively dilute (3-6% by vol.) alcohol solutions for the anode reaction in order to limit crossover and its detrimental consequences. However, the problem with such a DOFC system is that it requires a significant amount of water to be carried in a portable system, thus diminishing the system energy density.

The ability to use highly concentrated fuel is desirable for portable power sources, particularly since DOFC technology is currently competing with advanced batteries, such as those based upon lithium-ion technology. Therefore it is necessary to reduce methanol crossover from the anode to the cathode. There are several methods to reduce methanol crossover: (1) develop alternative proton conducting membranes with low methanol permeability, (see, N. W. Deluca and Y. A. Elabd, Polymer electrolyte membranes for the direct methanol fuel cell: A review, Journal of Polymer Science: Part B: Polymer Physics, 44, pp. 2201-2225, 2006 and V. Neburchilov, J. Martin, H.J. Wang, J.J. Zhang, A Review of Polymer Electrolyte Membranes for Direct Methanol Fuel Cells, Journal of Power Sources, 169, pp. 221-238, 2007); (2) modify the existing membrane like NAFION® by making it a composite with inorganic and organic materials, or by executing the membrane surface modification, (see Deluca et al., and Neburchilov et al.); (3) control the mass transport in the anode through a porous carbon plate.(See M. A. Abdelkareem and N. Nakagawa, DMFC employing a porous plate for an efficient operation at high methanol concentrations, Journal of Power Sources, 162, pp. 114-123, 2006).

However, the above-mentioned methods have certain disadvantages. In Method (1); low proton conductivity of alternative polymer electrolyte membranes and low compatibility/adhesion with NAFION®-bonded electrodes limit the attainment of high power density. In Method (2), modification of NAFION® membrane may lead to the decrease of proton conductivity and stability. In Method (3), the addition of porous carbon plate increases the thickness of each unit cell and hence increases the stack volume; and it likely increases the manufacturing cost of a DMFC system.

JOURNAL OF APPLIED ELECTROCHEMISTRY, vol. 36, no 1, 1 January 2006 (2006-01-01), pages 17-23, XP019247486, discloses the effect of operational parameters of mini-direct methanol fuel cells operating at ambient temperature, wherein two-layer gas diffusion electrodes comprising a diffusion layer which is made by mixing a carbon powder with a polytetrafluoroethylene (PTFE) dispersion which then deposited on a carbon cloth, such diffusion layers having a porosity of around 50 - 60 % are discussed. Here, catalysts with different Pt compounds are of particular interest.

US 2004/121208 A1 discloses a tubular direct methanol fuel cell comprising an inner electrode, an outer electrode concentrically arranged around the inner electrode, and a membrane separator having an annular electrolyte conduit concentric to and in between the electrodes. The electrodes are formed from carbon-based materials, such as carbon cloth, carbon fibers or graphite, and their porosity can be controlled through the admixture of or coating with PTFE. The porosity of the anode is described as being in the order of 1 % to 10%.

US 2007/154779 A1 discloses a porous carbon electrode substrate for use in a solid polymer fuel cell or a direct methanol fuel cell. This electrode substrate is provided with a woven structure and a property combination of a thickness ranging from 0,1 to 1,0 mm, a bending strength of 0,7 MPa or more, a porosity of 50% or more, and a surface resistivity of 1.0 $\Omega$/sq or less.

WO 2007/111201 A reveals a fuel cell configured to prevent the loss of a liquid fuel caused by crossover. It allows for a high output and high energy density utilizing a high-concentration liquid fuel. This fuel cell comprises at least an air electrode-side current collecting layer, an air electrode catalyst layer, a polymer electrolyte membrane, a fuel electrode catalyst layer, and a fuel electrode-side current collecting layer. A porous layer formed of a porous material is provided on the liquid fuel side of the fuel electrode-side current collecting layer, and functions as a medium for diffusion of a fuel into the fuel electrode catalyst layer. The porous layer is made of a carbon-based material and has a porosity of 55 %.

JP 2007 234589 A, DE 10 2006 048612 Al, EP-A-1 538 689 and US 2005/084742 A1 are commonly teaching anode, diffusion medias for fuel cells with emphasis on direct oxidation fuel cells (DOFC), comprising a porous composite layer made of carbonaceous material, such as carbon cloth or carbon paper. This material is mixed with a fluorinated polymer, such as PTFE or FEP.

In view of the foregoing, there exists a need for improved DOFC/DMFC systems including an anode diffusion medium (DM), which facilitates a reduction of methanol crossover.

## Summary of the Disclosure

An advantage of the present disclosure is a fuel cell having reduced fuel crossover from the anode to cathode and in particular a fuel cell having a reduced alcohol crossover.

Embodiments of the disclosure include a direct methanol fuel cell having an anode diffusion medium with a reduced porosity to minimize alcohol transport and crossover rates.

Hence, in one aspect of the invention, there is provided a direct oxidation fuel cell (DOFC) comprising a liquid fuel, an anode electrode configured to generate power, the anode electrode having a diffusion medium (DM) with or without a microporous layer, wherein the DM has a low porosity such that it reduces fuel crossover through the membrane and increases the power density of the DOFC under highly concentrated fuel, wherein the DM is loaded at between 30 wt% to 70 wt% with at least one fluorinated polymer, wherein at least one of said fluorinated polymer is fluorinated ethylene propylene.

In a further aspect of the invention, there is provided an anode electrode configured to be used in a DOFC, the anode electrode comprising a diffusion medium (DM) with or without a microporous layer, wherein said DM has a low porosity such that it reduces fuel crossover through the membrane and increases the power density of the DOFC, wherein said DM is loaded at 30 wt% to 70 wt% with at least one fluorinated polymer, wherein at least one of said fluorinated polymer is fluorinated ethylene propylene.

In still a further aspect of the invention, there is provided a method of operating a direct oxidation fuel cell (DOFC) system, comprising the steps of:

a) providing at least one fuel cell assembly including a cathode and an anode with an electrolyte positioned therebetween, said anode comprising a diffusion medium (DM) with or without a microporous layer, said DM comprising an electrically conductive material and a fluorinated polymer, wherein said fluorinated polymer is fluorinated ethylene propylene;

b) loading said DM with said fluorinated polymer at 30 wt% to 70 wt%;

c) supplying a concentrated solution of a liquid fuel and water to said anode; and

d) operating said at least one fuel cell assembly with low methanol crossover and high power density.

Preferred embodiments of the above recited aspects are defined in the subclaims.

These, as well as other components, steps, features, objects, benefits, and advantages, will now become clear from a review of the following detailed description of illustrative embodiments, the accompanying drawings, and the claims.

## Brief Description of the Drawings

The various features and advantages of the present disclosure will become more apparent and facilitated by reference to the accompanying drawings, provided for purposes of illustration only and not to limit the scope of the invention, wherein the same reference numerals are employed throughout for designating like features and the various features are not necessarily drawn to scale but rather are drawn as to best illustrate the pertinent features.

The drawings discloses illustrative embodiments. They do not set forth all embodiments. Other embodiments may be used in addition or instead. Details that may be apparent or unnecessary may be omitted to save space or for more effective illustration. Conversely, some embodiments may be practiced without all of the details that are disclosed, wherein:

FIG 1. is a graph showing the relationship between the porosity of FEP treated carbon paper and the FEP content;

FIG 2. is a graph showing methanol crossover under open-circuit condition of MEA at 70°C with the base case and modified anode DM when fed with 4M methanol;

FIG 3. is a graph showing methanol crossover under open-circuit condition of MEA at 65°C as a function of porosity of anode DM;

FIG 4. is a graph of IR-free anode polarization at 70°C as a function of current density with the base case and modified anode DM when fed with 4M methanol;

FIG 5. is a graph showing Steady-state performance discharged at $250mA/cm^2$ of DMFC with the base case and modified anode DM when fed with 4M methanol (Operating conditions: T=70°C, 4M, $\xi_a/\xi_c$=1.67/3@250mA/cm$^2$);

FIG 6. is a graph showing Steady-state performance of DMFC with the modified anode DM when fed with 6M at 65°C and with 8M methanol at 60°C.

## Detailed Description of the Disclosure

Illustrative embodiments are now discussed. Other embodiments may be used in addition or instead. Details that may be apparent or unnecessary may be omitted to save space or for a more effective presentation. Conversely, some embodiments may be practiced without all of the details that are disclosed

The crossover of a fuel in a direct oxidation fuel cell can depend on several factors. For example, alcohol crossover depends on such factors as alcohol concentration fed into the anode, operating temperature, alcohol permeability through anode diffusion media, thickness of anode diffusion media, and alcohol permeability through the membrane. A method proposed here is to reduce the alcohol crossover via the control of the mass permeability through the anode diffusion media. The alcohol permeation flux through the anode diffusion media depends on the effective mass diffusivity and the feed alcohol concentration, where the effective diffusivity is a function of porosity and tortuosity of anode diffusion media, as shown in Eq. (4),

$$D^{eff} = \varepsilon^n D \qquad (4)$$

where $D^{eff}$ is the effective mass diffusivity, $\varepsilon$ the porosity of anode diffusion media, D the alcohol molecular diffusivity, and n the Bruggmann factor to account for the tortuosity effect. In general, a low-porosity anode diffusion medium (DM) reduces the alcohol transport from the feed to the anode catalyst layer, thereby limiting alcohol crossover. Typically, the DM of a DOFC is about 78% porous. Hence, as used herein, a diffusion medium with a reduced or low porosity is one that is less than 78% porous.

In an embodiment of the disclosure the porosity of the DM is between 0.70 to 0.10. In a preferred embodiment of the disclosure the porosity of the DM is between about 0.57 to 0.10.

The low porosity anode diffusion media can be obtained via the following methods, but not limiting to: Filling currently available carbon paper or carbon cloth with polymers such as fluorinated ethylene propylene (FEP), using other diffusion media inherently of low porosity, such as porous carbon, and using metal foams with the controlled porosity.

Furthermore the anode DM may be configured with or without a microporous layer (MPL), which may provide additional resistance to alcohol transport.

Moreover, DM may have a thickness of less than 1000 micrometers, preferably less than 600 micrometers, and most preferably between 300 and 600 micrometers.

In this disclosure, carbon paper diffusion medium is used as an example to describe how using low-porosity anode diffusion media can significantly reduce alcohol crossover through the membrane. These methods and concepts can also be applied to other types of diffusion media. The carbon paper with different porosity can be obtained by treating the carbon paper with different loading of fluorinated ethylene propylene (FEP). The carbon paper porosity level depends on the weight fraction of the treated transparent exopolymer particles (TEP) in the carbon paper according to the following equation,

$$\varepsilon = \varepsilon_0 - \frac{\chi}{(1-\chi)} \cdot \frac{\rho_{CP}}{\rho_{FEP}} \quad (2)$$

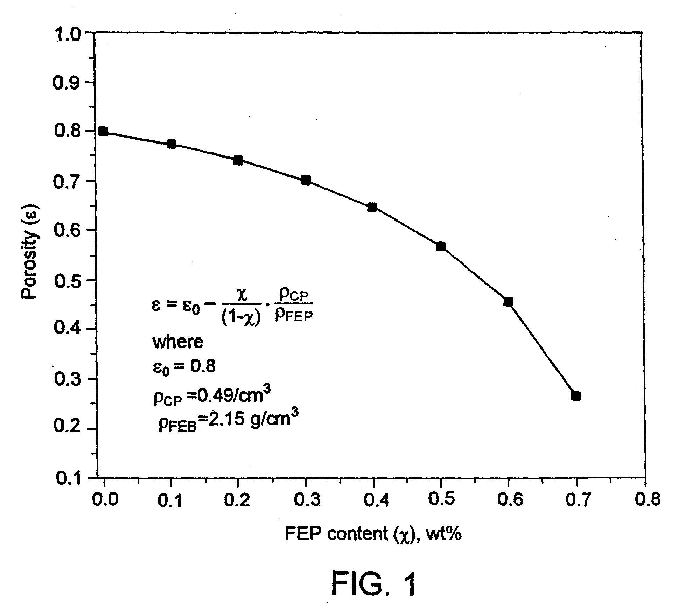

where $\varepsilon$ is the porosity of a FEP-treated carbon paper, $\varepsilon_0$ is the porosity of the untreated carbon paper, $\chi$ is the weight fraction of FEP in the carbon paper, $\rho_{CP}$ is the density of the carbon paper, and $\rho_{FEP}$ is the density of the dry FEP. FIG. 1 shows the relationship between the porosity of FEP-treated Toray TGPH-90 carbon paper and the weight fraction of dry FEP.

FIG. 1 shows that the high loading of FEP filled into carbon paper reduces the porosity of the carbon paper. The porosity of 10wt%, 30wt%, 50wt% and 70wt% FEP-treated Toray TGPH-90 carbon papers are 0.78, 0.70, 0.57 and 0.27 respectively. In this disclosure, two methods are described to reduce alcohol permeability through DM: one is to increase the thickness of anode diffusion media, and another is to reduce the pore size/porosity of anode diffusion media. In case 1, two pieces of 30wt% FEP-treated TGPH-90 Toray carbon paper ($\varepsilon$=0.70) is used as the anode DM.

In case 2, one piece of 50wt% FEP-treated TGPH-90 Toray carbon paper ($\varepsilon$=0.57) is used. In case 3, one piece of 70wt% FEP-treated TGPH-90 Toray carbon paper ($\varepsilon$=0.27) is used. In Cases 2 and 3, the high loading of treatment agents is used to reduce the porosity of the DM. As a result, a large resistance to alcohol transport is created in the DM.

The DM in the base case is 10wt% FEP-treated TGPH-90 Toray carbon paper ($\varepsilon$=0.78), which is optimal for the DMFC fed with 1 molar (M) or 2M methanol solution due to the balance between sufficient mass transport of methanol through the anode diffusion media and reasonable methanol crossover.

The carbon papers were treated with fluorinated ethylene propylene (FEP) as follows. The carbon paper was slowly dipped into a 20wt% FEP suspension, then was dried at 80°C in the oven. The procedure was repeated until the desired loading of the FEP (10wt%, 30wt%, 50wt% and 70wt%) was achieved. The FEP-impregnated carbon paper was heat-treated at 270°C for 10min and sintered at 340°C for 30 min. A paste for making desirable microporous layers (MPL) was made by mixing carbon powder (for example, Vulcan XC-72R) and 60wt%PTFE suspension, iso-propanol and de-ionized water. The paste was cast onto the surface of carbon paper to form a microporous layer. The coated carbon paper was dried at 100°C for 1h and sintered at 360°C for 30min. Details of MEA fabrication procedure are similar to that described in previous patents and/or publications, (see US 2008/0176112, 11/655,867), except for the 30wt%, 50wt% and 70wt% FEP-treated carbon paper used as the anode DM.

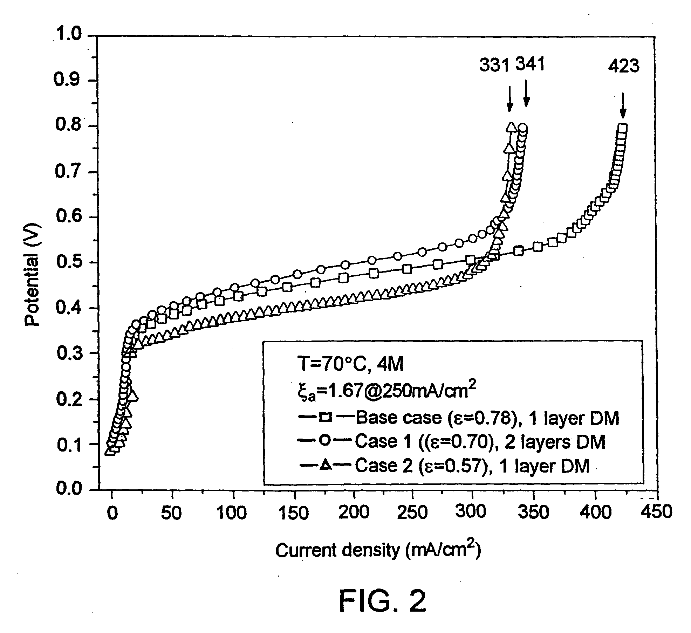

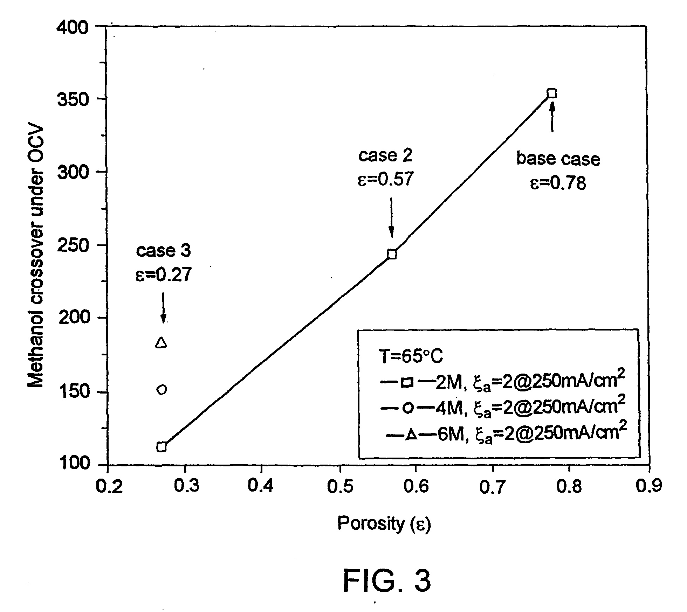

In comparison with the results obtained with the base case DM, the MEA with the modified DM in Cases 1 and 2 shows 19% and 22% reduction in methanol crossover under open-circuit condition when fed with 4 molar (M) methanol (see FIG. 2), respectively. This indicates that increasing thickness of the anode diffusion media (from one layer to two layers of Toray TGPH-90 carbon paper with a porosity of 0.70) and decreasing the porosity of the anode diffusion media (one layer DM with a porosity reduced from 0.78 to 0.57) can significantly reduce methanol crossover through the membrane. As shown in FIG. 3, methanol crossover decreases with decreasing of the porosity of anode DM.

When the porosity of the anode diffusion media is extremely low, such as 0.27 in Case 3, the methanol crossover through the membrane under open-circuit condition is very small. When fed with 2M methanol, the methanol crossover under open-circuit condition in Case 3 ($\varepsilon$=0.27) is only 32% of that exhibited in the base case ($\varepsilon$=0.78), and about half of that exhibited in Case 2 ($\varepsilon$=0.57). Even when fed with 6M, the methanol crossover under open-circuit condition in Case 3 is less than half of when fed with 2M in the base case. Therefore, low porosity anode diffusion media was found to be very effective to reduce methanol crossover through the membrane.

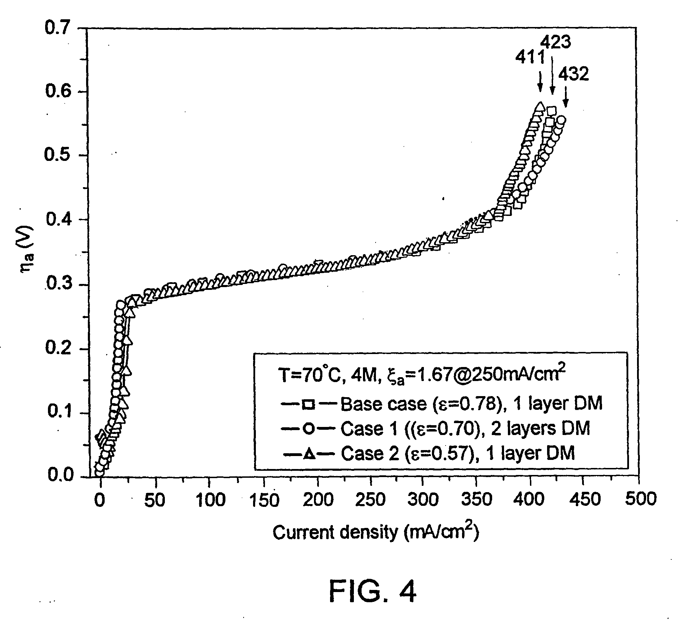

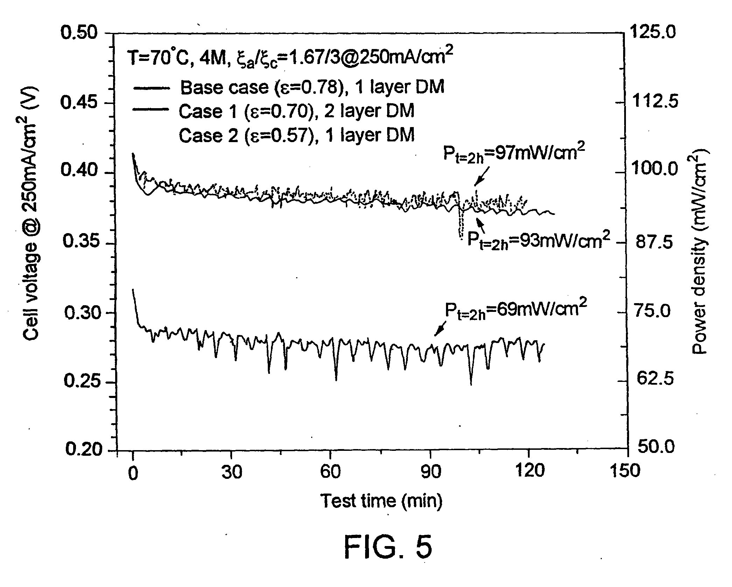

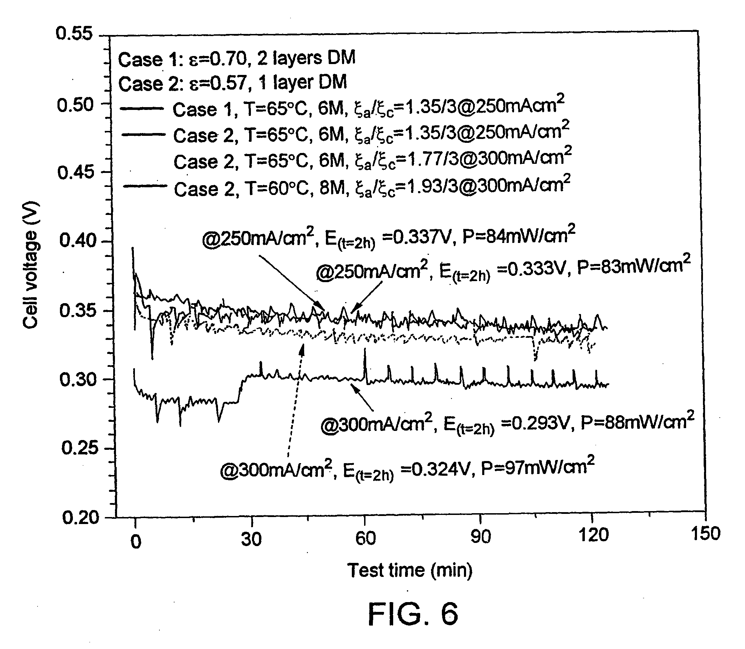

While fed with a fuel of 4M methanol, the iR-free anode overpotential in modified cases (Cases 1 and 2) is almost the same as that in the base case (FIG. 4). Low methanol crossover in the modified cases (Cases 1 and 2) increases fuel efficiency, and mitigates the effect of mixed potential at the cathode side. Therefore, there is a marked improvement in power density in case of MEA with the modified DMs. As shown in FIG. 5, the power density of the modified cases (Cases 1 and 2) can reach 93~97mW/cm$^2$ at 70°C, 35~40% higher than that achieved in the base case. As used herein, a concentrated fuel is one which is at least 2 molar (M) in concentration and a highly concentrated fuel is one which is at least 4M in concentration. In addition, DMFC with the modified DMs (Cases 1 and 2) can achieve high power even when fed with high concentration methanol fuel such as 6M and 8M methanol. As shown in FIG. 6, the highest power densities that can be reached are 97 and 88mW/cm$^2$ when fed with 6M at 65°C and 8M methanol at 60°C, respectively.

In summary, the present disclosure describes low-porosity anode diffusion media for use in DMFC systems, which facilitates operation at good power densities with highly concentrated fuel.

In the previous description, numerous specific details are set forth, such as specific materials, structures, reactants, processes, etc., in order to provide a better understanding of the present disclosure. However, the present disclosure can be practiced without resorting to the details specifically set forth. In other instances, well-known processing materials and techniques have not been described in detail in order not to unnecessarily obscure the present disclosure.

Only the preferred embodiments of the present disclosure and but a few examples of its versatility are shown and described in the present disclosure. It is to be understood that the present disclosure is capable of use in various other combinations and environments and is susceptible of changes and/or modifications within the scope of the disclosed concept as expressed herein.

The components, steps, features, objects, benefits and advantages that have been discussed are merely illustrative. None of them, nor the discussions relating to them, are intended to limit the scope of protection in any way. Numerous other embodiments are also contemplated, including embodiments that have fewer, additional, and/or different components, steps, features, objects, benefits and advantages. The components and steps may also be arranged and ordered differently.

The phrase "means for" when used in a claim embraces the corresponding structures and materials that have been described and their equivalents. Similarly, the phrase "step for" when used in a claim embraces the corresponding acts that have been described and their equivalents. The absence of these phrases means that the claim is not limited to any of the corresponding structures, materials, or acts or to their equivalents.

Nothing that has been stated or illustrated is intended to cause a dedication of any component, step, feature, object, benefit, advantage, or equivalent to the public, regardless of whether it is recited in the claims.

In short, the scope of protection is limited solely by the claims that now follow. That scope is intended to be as broad as is reasonably consistent with the language that is used in the claims and to encompass all structural and functional equivalents

## Claims

1. A direct oxidation fuel cell (DOFC) comprising: a liquid fuel, an anode electrode configured to generate power, the anode electrode having a diffusion medium (DM) with or without a microporous layer; wherein the DM has a low porosity such that it reduces fuel crossover through the membrane and increases the power density of the DOFC under highly concentrated fuel;
   wherein the DM is loaded at between 30 wt% to 70wt% with at least one fluorinated polymer, wherein at least one of said fluorinated polymer is fluorinated ethylene propylene.

2. The DOFC of claim 1, wherein the DM porosity is between 0.70 and 0.10.

3. The DOFC of claim 2, wherein the DM porosity is between about 0.57 and 0.10.

4. The DOFC of claim 1, wherein the DM thickness is less than 600 micrometers.

5. The DOFC of claim 1, wherein the DM thickness is between 300 and 600 micrometers.

6. The DOFC of claim 1, wherein said highly concentrated liquid fuel is at least 4 molar (M) in concentration.

7. The DOFC of claim 1, wherein said highly concentrated liquid fuel is methanol.

8. The DOFC of claim 7, wherein said highly concentrated methanol is at least 4 molar (M) in concentration.

9. An anode electrode configured to be used in a direct oxidation fuel cell (DOFC), the anode electrode comprising a diffusion medium (DM) with or without a microporous layer, wherein said DM has a low porosity such that it reduces fuel crossover through the membrane and increases the power density of the DOFC,
wherein said DM is loaded at 30wt% to 70wt% with at least one fluorinated polymer,
wherein at least one of said fluorinated polymer is fluorinated ethylene propylene.

10. The anode of claim 9, wherein said DM comprises carbon paper, carbon cloth, porous carbon, or porous metals.

11. The anode of claim 9, wherein said microporous layer is prepared from carbon powder and Polytetrafluorethylene (PTFE) suspension.

12. The anode of claim 9, wherein the porosity of said DM layer is less than 0.78.

13. The anode of claim 12, wherein the porosity of said DM layer is between 0.70 and 0.10.

14. The anode of claim 13, wherein the porosity of said DM layer is between about 0.57 and 0.10.

15. A method of operating a direct oxidation fuel cell DOFC system, comprising the steps of:

a) providing at least one fuel cell assembly including a cathode and an anode with an electrolyte positioned therebetween, said anode comprising a diffusion medium (DM) with or without a microporous layer, said DM comprising an electrically conductive material and a fluorinated polymer wherein said fluorinated polymer is fluorinated ethylene propylene;
b) loading said DM with said fluorinated polymer at 30 wt% to 70 wt%;
c) supplying a concentrated solution of a liquid fuel and water to said anode; and
d) operating said at least one fuel cell assembly with low methanol crossover and high power density.

**Patentansprüche**

1. Direkte-Oxidation-Brennstoffzelle (DOFC) umfassend:

einen flüssigen Brennstoff, eine Anoden-Elektrode, welche ausgebildet ist Strom zu erzeugen, wobei die Anoden-Elektrode ein Diffusionsmedium (DM) mit oder ohne einer mikroporösen Schicht aufweist; wobei das DM eine geringe Porosität aufweist, so dass dieses einen Brennstoffübergang durch die Membran verringert und die Energiedichte der DOFC unter hoch konzentriertem Brennstoff erhöht;
wobei das DM mit zwischen 30 Gew.-% bis 70 Gew.-% zumindest eines fluorinierten Polymers beladen ist,
wobei zumindest eines des fluorinierten Polymers fluoriniertes Ethylen-Propylen ist.

2. DOFC nach Anspruch 1, wobei die DM-Porosität zwischen 0,70 und 0,10 ist.

3. DOFC nach Anspruch 2, wobei die DM-Porosität zwischen 0,57 und 0,10 ist.

4. DOFC nach Anspruch 1, wobei die DM-Dicke weniger als 600 $\mu$m ist.

5. DOFC nach Anspruch 1, wobei die DM-Dicke zwischen 300 und 600 $\mu$m ist.

6. DOFC nach Anspruch 1, wobei der hoch konzentrierte flüssige Brennstoff eine zumindest 4 molare (M) Konzentration aufweist.

7. DOFC nach Anspruch 1, wobei der hoch konzentrierte flüssige Brennstoff Methanol ist.

8. DOFC nach Anspruch 7, wobei das hoch konzentrierte Methanol eine zumindest 4 molare (M) Konzentration aufweist.

9. Anoden-Elektrode, welche zur Verwendung in einer Direkten-Oxidation-Brennstoffzelle (DOFC) ausgebildet ist, wobei die Anoden-Elektrode ein Diffusionsmedium (DM) mit oder ohne eine mikroporöse Schicht aufweist, wobei das DM eine geringe Porosität aufweist, so dass dieses einen Brennstoffübergang durch die Membran verringert und die Energiedichte der DOFC erhöht,
wobei das DM mit 30 Gew.-% bis 70 Gew.-% zumindest eines fluorinierten Polymers beladen ist, wobei zumindest eines des fluorinierten Polymers fluoriniertes Ethylen-Propylen ist.

10. Anode nach Anspruch 9, wobei das DM Kohlenstoffpapier, Kohlenstoffgewebe, porösen Kohlenstoff, oder poröse Metalle umfasst.

11. Anode nach Anspruch 9, wobei die mikroporöse Schicht aus Kohlenstoffpulver und Polytetrafluorethylen (PTFE) Suspension hergestellt ist.

12. Anode nach Anspruch 9, wobei die Porosität der DM-Schicht weniger als 0,78 ist.

13. Anode nach Anspruch 12, wobei die Porosität der DM-Schicht zwischen 0,70 und 0,10 ist.

14. Anode nach Anspruch 13, wobei die Porosität der DM-Schicht zwischen ungefähr 0,57 und 0,10 ist.

15. Verfahren zum Betreiben eines Direkte-Oxidation-Brennstoffzellensystems (DOFC), umfassend die Schritte:

a) Bereitstellen zumindest einer Brennstoffzellenanordnung umfassend eine Kathode und eine Anode mit einem dazwischen angeordneten Elektrolyt, wobei die Anode ein Diffusionsmedium (DM) mit oder ohne einer mikroporöse Schicht aufweist, wobei das DM ein elektrisch leitfähiges Material und ein fluoriniertes Polymer umfasst, wobei das fluorinierte Polymer fluoriniertes Ethylen-Propylen ist;
b) Beladen des DM mit 30 Gew.-% bis 70 Gew.-% des fluorinierten Polymers;
c) Zuführen einer konzentrierten Lösung eines flüssigen Brennstoffs und Wasser zu der Anode; und
d) Betreiben der zumindest einen Brennstoffzellenanordnung mit geringem Methanolübergang und hoher Energiedichte.

**Revendications**

1. Pile à combustible à oxydation directe (DOFC) comprenant : un combustible liquide, une électrode d'anode configurée pour produire un courant, l'électrode d'anode ayant un milieu de diffusion (MD) avec ou sans couche microporeuse ; où le MD a une porosité basse telle qu'elle réduit le « cross-over » du combustible à travers la membrane et augmente la densité de puissance de la DOFC avec un combustible hautement concentré ;
où le MD est chargé à 30 - 70 pourcent en poids d'au moins un polymère fluoré,
où l'au moins un polymère fluoré est l'éthylène-propylène fluoré.

2. DOFC selon la revendication 1, où la porosité du MD est comprise entre 0,70 et 0,10.

3. DOFC selon la revendication 2, où la porosité du MD est comprise entre 0,57 et 0,10.

4. DOFC selon la revendication 1, où l'épaisseur du MD est inférieure à 600 micromètres.

5. DOFC selon la revendication 1, où l'épaisseur du MD est comprise entre 300 et 600 micromètres.

6. DOFC selon la revendication 1, où le combustible liquide hautement concentré a une concentration molaire (M) d'au moins 4.

7. DOFC selon la revendication 1, où le combustible liquide hautement concentré est du méthanol.

8. DOFC selon la revendication 7, où le méthanol hautement concentré a une concentration molaire (M) d'au moins 4.

9. Electrode anode configurée pour être utilisée dans une pile à combustible à oxydation directe (DOFC), l'électrode anode comprenant un milieu de diffusion (MD) avec ou sans couche microporeuse, où le MD a une porosité basse telle qu'elle réduit le « cross-over » du combustible à travers la membrane et augmente la densité de puissance de la DOFC,
où le MD est chargé à 30 - 70 pourcent en poids d'au moins un polymère fluoré,

où l'au moins un polymère fluoré est l'éthylène-propylène fluoré.

10. Anode selon la revendication 9, où le MD comprend un papier carbone, un tissu carbone, du carbone poreux ou des métaux poreux.

11. Anode selon la revendication 9, où la couche microporeuse est préparée à partir de poudre de carbone et d'une suspension de polytétrafluoroéthylène (PTFE).

12. Anode selon la revendication 9, où la porosité de la couche de MD est inférieure à 0,78.

13. Anode selon la revendication 12, où la porosité de la couche de MD est comprise entre 0,70 et 0,10.

14. Anode selon la revendication 13, où la porosité de la couche de MD est comprise entre environ 0,57 et 0,10.

15. Méthode de fonctionnement d'un système de pile à combustible à oxydation directe (DOFC), comprenant les étapes suivantes :

(a) mise à disposition d'au moins un dispositif de pile à combustible comportant une cathode et une anode avec un électrolyte positionné entre elles, l'anode comprenant un milieu de diffusion (MD) avec ou sans couche microporeuse, le MD comprenant un matériau électriquement conducteur et un polymère fluoré, où le polymère fluoré est un éthylène-propylène fluoré ;
(b) chargement du MD en polymère fluoré à 30 - 70 pourcent en poids ;
(c) approvisionnement de l'anode en une solution concentrée d'un combustible liquide et d'eau ; et
(d) fonctionnement du dispositif de pile à combustible avec un faible « cross-over » du méthanol et une densité de puissance élevée.

$$\varepsilon = \varepsilon_0 - \frac{\chi}{(1-\chi)} \cdot \frac{\rho_{CP}}{\rho_{FEP}}$$

where
$\varepsilon_0 = 0.8$

$\rho_{CP} = 0.4 \mathrm{9/cm^3}$

$\rho_{FEB} = 2.15 \, \mathrm{g/cm^3}$

FIG. 1

FIG. 2

EP 2 253 039 B1

FIG. 3

FIG. 4

FIG. 5

FIG. 6

**EP 2 253 039 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004121208 A1
- US 2007154779 A1
- WO 2007111201 A
- JP 2007234589 A
- DE 102006048612 A1
- EP 1538689 A
- US 2005084742 A1
- US 20080176112 A
- US 11655867 B

### Non-patent literature cited in the description

- **N. W. DELUCA ; Y. A. ELABD.** Polymer electrolyte membranes for the direct methanol fuel cell: A review. *Journal of Polymer Science: Part B: Polymer Physics,* 2006, vol. 44, 2201-2225
- **V. NEBURCHILOV ; J. MARTIN ; H.J. WANG ; J.J. ZHANG ; A REVIEW.** of Polymer Electrolyte Membranes for Direct Methanol Fuel Cells. *Journal of Power Sources,* 2007, vol. 169, 221-238
- **M. A. ABDELKAREEM ; N. NAKAGAWA.** DMFC employing a porous plate for an efficient operation at high methanol concentrations. *Journal of Power Sources,* 2006, vol. 162, 114-123
- *JOURNAL OF APPLIED ELECTROCHEMISTRY,* 01 January 2006, vol. 36 (1), 17-23